# EUROPÄISCHE PATENTANMELDUNG

(11) **EP 2 410 494 A1**
(43) Veröffentlichungstag der Anmeldung: **25.01.2012**
(21) Anmeldenummer: 10007550.6
(22) Anmeldetag: 21.07.2010
(51) Int. Cl.: G07B 15/02, B60L 11/18

(54) **Verfahren zum Betrieb einer Stromtankstelle**

(71) Anmelder: Scheidt & Bachmann GmbH, 41238 Mönchengladbach (DE)
(72) Erfinder: Miller, Dr. Norbert, 41063 Mönchengladbach (DE); Baum, Josef, 41066 Mönchengladbach (DE); Fleps, Ulrich, 41849 Wassenberg (DE)
(74) Vertreter: Stenger, Watzke & Ring

(57) **Zusammenfassung**

Die Erfindung betrifft ein Verfahren zum Betrieb einer Stromtankstelle (2) in einer Parkeinrichtung (1). Um eine möglichst vereinfachte Verfahrensdurchführung zu gestatten, wird mit der Erfindung vorgeschlagen, ein Verfahren zum Betrieb einer Stromtankstelle (2) in einer Parkeinrichtung (1), bei der bei Einfahrt in die Parkeinrichtung (1) ein Identifikationsmittel (17) durch einen Nutzer (16) verwendet wird, wobei das Identifikationsmittel (17) eine eineindeutige Kennung bereitstellt, bei dem eine Stromabgabeeinrichtung (3) der Stromtankstelle (2) vom Benutzer (16) mittels des Identifikationsmittels (17) freigeschaltet wird und alsdann für einen Ladevorgang bereitsteht.

## Beschreibung

Die Erfindung betrifft ein Verfahren zum Betrieb einer Stromtankstelle in einer Parkeinrichtung.

Stromtankstellen sind aus dem Stand der Technik an sich bekannt. Sie verfügen über Stromabgabeeinrichtungen, die im einfachsten Fall als Steckdosen ausgebildet sind.

Zum Zwecke des Aufladens einer Batterie, beispielsweise eines Akkumulators eines Elektroautos ist diese an eine Stromabgabeeinrichtung anzuschließen. Dies kann typischerweise mittels eines im Elektroauto mitgeführten Ladekabels erfolgen. Dieses ist stromabgabeeinrichtungsseitig mit einem zu der von der Stromabgabeeinrichtung bereitgestellten Steckdose kompatiblen Stecker ausgerüstet. Sobald der Stecker des Ladekabels in die Steckdose der Stromabgabeeinrichtung eingesteckt ist, kann ein Aufladevorgang beginnen.

Nach Abschluss eines Ladevorgangs erfolgt eine Inrechnungstellung, und zwar auf Basis des über die Stromabgabeeinrichtung entnommenen Stroms.

Aus dem Stand der Technik sind ferner Parkeinrichtungen bekannt. Hierzu zählen insbesondere Parkhäuser, Parkplätze und sonstige Parkflächen. Bei gebührenpflichtigen Parkeinrichtungen erfolgt eine Abrechnung der Parkgebühren mit Beendigung des Parkvorgangs, wobei vorbekannte Parkeinrichtungen typischerweise beschrankt ausgebildet sind und ein Verlassen der Parkeinrichtung erst nach vorheriger Parkgebührenentrichtung möglich ist. Es kommen in diesem Zusammenhang insbesondere automatisierte Bezahlsysteme zum Einsatz, die auf Basis von Kassenautomaten und Magnetstreifenkarten, ChipCoins und/oder dergleichen arbeiten.

Die Erfindung betrifft nun ein Verfahren zum Betrieb einer Stromtankstelle, und zwar einer solchen in einer Parkeinrichtung. Dabei liegt der Erfindung die Aufgabe zugrunde, eine möglichst vereinfachte Verfahrensdurchführung vorzuschlagen.

Zur Lösung dieser Aufgabe wird mit der Erfindung vorgeschlagen, ein Verfahren zum Betrieb einer Stromtankstelle in einer Parkeinrichtung, bei dem bei Einfahrt in die Parkeinrichtung ein Identifikationsmittel durch einen Nutzer verwendet wird, wobei das Identifikationsmittel eine eineindeutige Kennung bereitstellt, bei dem eine Stromabgabeeinrichtung der Stromtankstelle vom Nutzer mittels des Identifikationsmittels freigeschaltet wird und alsdann für einen Ladevorgang bereitsteht.

Gemäß der erfindungsgemäßen Verfahrensdurchführung ist vorgesehen, dass ein Nutzer bei Einfahrt in die Parkeinrichtung ein Identifizierungsmittel verwendet. Bei einem solchen Identifizierungsmittel kann es sich um eine Magnetstreifenkarte, einen ChipCoin, eine Barcodekarte oder dergleichen handeln. Dabei kann das Identifikationsmittel beim Einfahren in die Parkeinrichtung an den Nutzer ausgegeben werden. Dies ist typischerweise bei Einzelparkvorgängen der Fall. Gemäß einer alternativen Ausgestaltung kann das Identifikationsmittel vom Benutzer aber auch mitgeführt und bei Einfahrt in die Parkeinrichtung vorgezeigt, eingelesen und/oder beschrieben werden. Typischerweise kommt diese alternative Verfahrensdurchführung bei sogenannten Dauerparkern zum Einsatz.

Verfahrensseitig ist in jedem Fall vorgesehen, dass das Identifikationsmittel eine eineindeutige Kennung bereitstellt. Dies kann beispielsweise eine Identifizierungsnummer sein, kombiniert mit weiteren Angaben, wie zum Beispiel der Einfahrtzeit in die Parkeinrichtung und/oder dergleichen. Möchte der Nutzer die in der Parkeinrichtung installierte Stromtankstelle nutzen, so ist dies mittels des von ihm mitgeführten Identifikationsmittels möglich. Verfahrensseitig ist vorgesehen, dass eine Stromabgabeeinrichtung der Stromtankstelle vom Benutzer mittels des Identifikationsmittels freigeschaltet werden kann. Zu diesem Zweck kann beispielsweise vorgesehen sein, dass die Stromabgabeeinrichtung über einen Karten- und/oder Coinleser verfügt, d.h. eine Lesevorrichtung zur Auslesung der von dem Identifikationsmittel bereitgestellten eineindeutigen Kennung. Mit einer Freischaltung der Stromabgabeeinrichtung steht diese für einen Ladevorgang bereit. An die Stromabgabeeinrichtung kann zwecks Aufladung nunmehr eine Batterie, insbesondere die Batterie eines Elektroautos angeschlossen werden. Zur Beendigung des Ladevorgangs dient gleichfalls wieder das Identifikationsmittel. Über die eineindeutige Kennung kann der Ladevorgang durch den Benutzer mittels des Identifikationsmittels beendet werden.

Die Abrechnung der angefallenen Parkgebühren einerseits sowie die angefallenen Stromgebühren anderseits erfolgt alsdann gemeinschaftlich, beispielsweise mittels des Identifikationsmittels bei Einzelparkern oder im Rahmen einer Monatsabrechnung bei Dauerparkern.

Die erfindungsgemäße Verfahrensdurchführung erlaubt die Aufladung von Elektromobilen dort, wo sie geparkt werden, nämlich in Parkhäusern und Parkplätzen zum Beispiel von Einkaufszentren oder dergleichen. Mit dem erfindungsgemäßen Verfahren wird vorgeschlagen, die Ladeinfrastruktur, die Autorisierung der Stromtankstelle und die Bezahlung mit standardisierten Bedienelementen von Parkierungssystemen zu verbinden. Der Nutzer zahlt wie gewohnt sein Parkticket oder seinen ChipCoin einschließlich der darauf codierten Strompauschale. Bei Einzelparkern kann am Kassenautomat in gewohnter Weise abgerechnet werden. Bei Dauerparkern findet eine Abrechnung ebenfalls in gewohnter Weise statt, beispielsweise monatlich. Betreiber müssen damit in vorteilhafter Weise nicht zusätzlich in ein Autorisierungs- und Abrechnungssystem für die Ladeinfrastruktur investieren und Nutzer, d.h. Kunden können in gewohnter Weise ein bestehendes System nutzen und müssen sich nicht an ergänzende Drittsysteme gewöhnen. Die erfindungsgemäße Verfahrensabwicklung erweist sich deshalb als äußerst einfach, und zwar sowohl in der Anwendung, als auch in der Implementierung.

Das nach der erfindungsgemäßen Verfahrensdurchführung vorgesehen Identifikationsmittel dient einem Nutzer als Autorisierungs- und Abrechnungsmittel für die in der Parkeinrichtung vorhandene Stromtankstelle. Erfolgt keine nutzerseitige Verwendung der Stromtankstelle, wird also benutzerseitig eine Stromabgabeeinrichtung nicht benutzt, so dient das Identifikationsmittel in gewohnter Weise der Abrechnung von Parkgebühren. Wird indes nutzerseitig die in der Parkeinrichtung vorgesehene Stromtankstelle genutzt, so kann dies ohne zusätzliche Autorisierungs- und/oder Bezahlmittel abgewickelt werden, da erfindungsgemäß das beim Nutzer ohnehin zum Zwecke des Parkens vorhandene Identifikationsmittel genutzt wird.

Die im Falle der Stromabnahme anfallenden Stromgebühren werden zusammen mit den Parkgebühren abgerechnet. Das zur Abrechnung von Parkgebühren ohnehin vorgesehene Kassensystem kann hierzu in vorteilhafter Weise genutzt werden, wenn die Einführung von Drittsystemen zur Stromabrechnung nicht erforderlich ist. Dabei kann die Stromabrechnung auf unterschiedliche Weisen durchgeführt werden. Die anfallenden Stromgebühren können positiv, null oder negativ sein.

Gemäß einer ersten Alternative der Erfindung ist vorgesehen, dass der Ladevorgang durch eine Bezahlung der angefallenen Gebühren beendet wird. Gemäß dieser Alternative erfolgt eine Bezahlung beispielsweise am Kassenautomat. Der Bezahlvorgang wird über das Identifikationsmittel eingeleitet. Die insgesamt zu zahlende Gebühr wird dem Nutzer über den Kassenautomat angezeigt. Gleichzeitig mit der Zahlung am Kassenautomat wird die Stromabnahme beendet, d.h. der Ladevorgang abgeschlossen. Die zu zahlenden Gebühren setzen sich aus Parkgebühren und eventuell angefallenen Stromgebühren zusammen. Der Nutzer kann alsdann die aufgeladene Batterie seines Elektromobils von der Stromtankstelle trennen und die Parkeinrichtung verlassen. Diese alternative Vorgehensweise beim Bezahlvorgang setzt den "Online"-Betrieb zwischen Stromtankstelle einerseits und Kassenautomat andererseits voraus.

Gemäß einer zweiten Alternative der Erfindung ist vorgesehen, dass der Ladevorgang zeitlich nach einer Bezahlung beendet wird, wobei eine mit dem Identifikationsmittel verknüpfte Bezahlung der angefallenen Gebühren in der Stromabgabeeinrichtung ausgewertet wird. Gemäß dieser Alternative erfolgt zunächst eine Bezahlung der angefallenen Gebühren am Kassenautomat. Dabei werden die angefallenen Gebühren anhand der auf dem vom Nutzer mitgeführten Identifikationsmittel gespeicherten Daten errechnet. Sobald eine Bezahlung erfolgt ist, wird dies auf dem Identifikationsmittel vermerkt. Der Nutzer hat alsdann die von ihm in Verwendung genommene Stromabgabeeinrichtung aufzusuchen, wo ein Auslesen des Identifikationsmittels stattfindet. Sobald seitens der Stromtankstelle die erfolgte Bezahlung erfasst ist, wird der Ladevorgang beendet. Bevorzugter Weise ist in diesem Zusammenhang vorgesehen, dass dem Nutzer ein gewisses Zeitfenster zwischen Bezahlung einerseits und Einleitung der Beendigung des Ladevorgangs anderseits zur Verfügung steht. Diese Verfahrensalternative kann sowohl im "Online"-Betrieb, als auch im "Offline"-Betrieb durchgeführt werden.

Gemäß einer dritten Alternative der Erfindung ist vorgesehen, dass der Ladevorgang beendet wird, bevor eine Bezahlung der mit dem Identifikationsmittel verknüpften Gebühren erfolgt. Diese Verfahrensalternative bietet sich insbesondere bei einem "Offline"-Betrieb von Stromtankstelle und Kassenautomat an. Dabei ist vorgesehen, dass der Nutzer zunächst die von ihm in Benutzung genommene Stromabgabeeinrichtung aufsucht und den Ladevorgang durch Einlesen seines Identifikationsmittels beendet. Die Daten zur Stromabgabe werden auf dem Identifikationsmittel gespeichert. Alsdann sucht der Nutzer den Kassenautomat auf. Sein Identifikationsmittel enthält sämtliche Angaben sowohl zur Berechnung der Stromgebühr, als auch der Parkgebühr. Nach erfolgter Bezahlung am Kassenautomat erhält der Nutzer sein Identifikationsmittel zurück, welches nunmehr die zusätzliche Information trägt, dass sämtliche Gebühren beglichen sind. Die Ausfahrt aus der Parkeinrichtung ist dem Nutzer alsdann innerhalb eines vorgebbaren Zeitfensters gestattet.

Gemäß einer vierten Alternative der Erfindung ist vorgesehen, dass eine Beendigung des Ladevorgangs durch Einlesen des Identifikationsmittels erfolgt und eine Nutzung auf dem Identifikationsmittel oder im Parkhaus-Management-System vermerkt wird. Diese Verfahrensalternative eignet sich besonders für Dauerparker. Nach Beendigung des Ladevorgangs kann dieser nun direkt zur Ausfahrt fahren ohne Umweg über einen Kassenautomaten. Die angefallenen Gebühren werden erfasst und turnusmäßig abgerechnet.

Um insbesondere dafür Sorge tragen zu können, dass auch tatsächlich eine Bezahlung im Falle der Stromabnahme erfolgt, wird aus Sicherheitsgründen mit einem weiteren Merkmal der Erfindung vorgeschlagen, dass der Ladestecker mit Beginn des Ladevorgangs und nach Auslesung der von dem Identifikationsmittel bereitgestellten eineindeutigen Kennung seitens der Stromabgabeeinrichtung verriegelt wird und diese Verriegelung erst nach erneutem Einlesen des Identifikationsmittels wieder freigegeben wird. Vorzugsweise erfolgt diese Verriegelung mechanisch. So kann beispielsweise ein Verschlussbügel vorgesehen sein, der mit Beginn des Ladevorgangs verschwenkt und der den in die Steckdose der Stromabgabeeinrichtung eingesteckten Ladestecker derart verriegelt, dass ein zerstörungsfreies Herausziehen desselben aus der Stromabgabeeinrichtung nicht möglich ist. Hierdurch kann sichergestellt werden, dass der Ladestecker nur durch autorisierte Personen gezogen werden kann, die sich im Besitz des Identifikationsmittels befinden.

Vorschlagsweise könnte der Ladevorgang erneut gestartet werden, wenn innerhalb eines vorgebbaren Zeitfensters nach Beendigung des Ladevorgangs der Ladestecker nicht gezogen wurde.

Es ist gemäß einem weiteren Merkmal der Erfindung vorgesehen, dass dem Nutzer bei Einfahrt in die Parkeinrichtung freie Parkplätze mit Stromabgabeeinrichtungen angezeigt werden. Dies erleichtert es dem Nutzer, in der Parkeinrichtung vorhandene Stromabgabeeinrichtung ausfindig zu machen. Dabei kann in diesem Zusammenhang ferner vorgesehen sein, dass Elektromobile bei Einfahrt in die Parkeinrichtung automatisch erkannt werden und eine Anzeige von freien Parkplätzen mit Stromabgabeeinrichtung nur in diesen Fällen und/oder auf nutzerseitige Anfrage erfolgt.

Die von den Stromabgabeeinrichtungen der Stromtankstelle insgesamt bereitgestellte Leistung wird mittels einer zentralen Einrichtung erfasst. Etwaige Überlastungen des Systems können so erkannt werden und es können gegebenenfalls erforderliche Gegenmaßnahmen zeitnah eingeleitet werden.

Gemäß einem weiteren Merkmal der Erfindung ist vorgesehen, dass die zur Verfügung stehende Energiemenge aufgrund von Nutzungs- und/oder Zeitprofilen verteilt wird. Gemäß dieser besonderen Verfahrensdurchführung ist vorgesehen, dass die Stromabgabe unter Beachtung vorgebbarer Parameter erfolgt. So kann beim Ladevorgang beispielsweise ein Zeitprofil Berücksichtigung finden, ob also ein Kurzzeitparken oder ein Langzeitparken vorgesehen ist. Im Falle des Langzeitparkens kann gegebenenfalls auf verbilligten Nachtstrom zurückgegriffen werden. Ferner kann die Aufladezeit in einen solchen Tagesabschnitt verlegt werden, dass mögliche Energiespitzen vermieden werden. Ferner kann ein Nutzungsprofil bei der Aufladung Berücksichtigung finden, ob also beispielsweise eine Aufladung während der typischen Arbeitszeiten oder am Wochenende erfolgt. Ferner kann Berücksichtigung finden, ob das an die Stromabgabeeinrichtung angeschlossene Fahrzeug vorwiegend im Stadtverkehr oder mehr auf Langstrecken zum Einsatz kommt. Bevorzugter Weise können Nutzungsprofile und/oder Zeitprofile erfasst und gespeichert werden bzw. sein. Dies kann beispielsweise bereits bei einer Reservierung eines Parkplatzes erfolgen.

In diesem Zusammenhang kann ferner vorgesehen sein, dass Fahrzeuge, für die ein Stromnutzungsprofil bekannt ist, automatisch zu einem Parkplatz mit Stromabgabeeinrichtung geleitet werden. Diese Verfahrensvariante ist insbesondere bei Dauerparkern von Vorteil, da bereits bei Einfahrt in die Parkeinrichtung systemseitig erkannt wird, ob ein Ladevorgang ansteht oder nicht.

Insbesondere aus Sicherheitsgründen können gemäß einem weiteren Merkmal der Erfindung neben dem bereits schon vorhandenen Identifikationsmittel weitere Identifikationsmedien vorgesehen sein, beispielsweise Datenträger, mittels denen eine Identifikation des Nutzers stattfindet. Dabei können insbesondere solche Datenträger zum Einsatz kommen, die sich ohnehin schon im Besitz des Nutzers befinden, wie beispielsweise Kreditkarten, Personalausweise, Reisepass und/oder dergleichen.

Die Tarifermittlung, d.h. die Berechnung der Stromgebühr kann in Abhängigkeit von der Stromart erfolgen, wobei vorzugsweise zwischen Wechselspannung und Drei-Phasen-Spannung unterschieden werden kann.

Gemäß einem weiteren Merkmal der Erfindung können dem Nutzer unterschiedliche Ladeprioritäten zur Auswahl zur Verfügung gestellt werden. Gemäß einer ersten Ladepriorität kann beispielsweise vorgesehen sein, dass ein Ladevorgang in solchen Zeitabschnitten erfolgt, in denen eine Stromentnahme vergleichsweise günstig ist. Gemäß einer anderen Priorität kann vorgesehen sein, dass ein Ladevorgang in jedem Fall erfolgt, und zwar auch dann, wenn hierfür vergleichsweise teurer Strom verwendet werden muss.

Gemäß einem weiteren Merkmal der Erfindung wird ein Lade- und/oder Last-Management verwendet. Dieses dient insbesondere dazu, Ladevorgänge in der zur Verfügung stehenden Zeit optimiert durchzuführen. So kann beispielsweise vorgesehen sein, dass die in einem Akkumulator eines Stromfahrzeuges vorhandene Energie zum Laden von anderen Fahrzeugen benutzt wird, bevor es dann zu einer Komplettwiederaufladung dieses Akkumulators kommt. Auf diese Weise kann systemweit eine optimierte Aufladung erreicht werden, wobei beispielsweise Stromspitzen weitestgehend vermieden werden, akkumulatorschonende Aufladungen durchgeführt und schlussendlich vorzugsweise möglichst günstiger Strom zur Aufladung verwendet wird.

Gemäß einem weiteren Merkmal der Erfindung kann vorgesehen sein, dass eine Zentralerfassung hinsichtlich der in Verwendung befindlichen Stromabgabeeinrichtungen erfolgt. Dies kann einem Nutzer angezeigt werden, ebenso wie die prognostizierte Wartezeit für den Fall, dass sämtliche Stromabgabeeinrichtungen belegt sind.

Weitere Merkmale und Vorteile der Erfindung ergeben sich aus der nachfolgenden Beschreibung anhand der Figuren. Dabei zeigen:
- Figur 1: in schematischer Darstellung eine Parkeinrichtung mit einer Stromtankstelle;
- Figur 2: in schematischer Darstellung eine Stromabgabeeinrichtung einer Stromtankstelle und
- Figur 3: in schematischer Darstellung einen möglichen Verfahrensablauf nach der Erfindung.

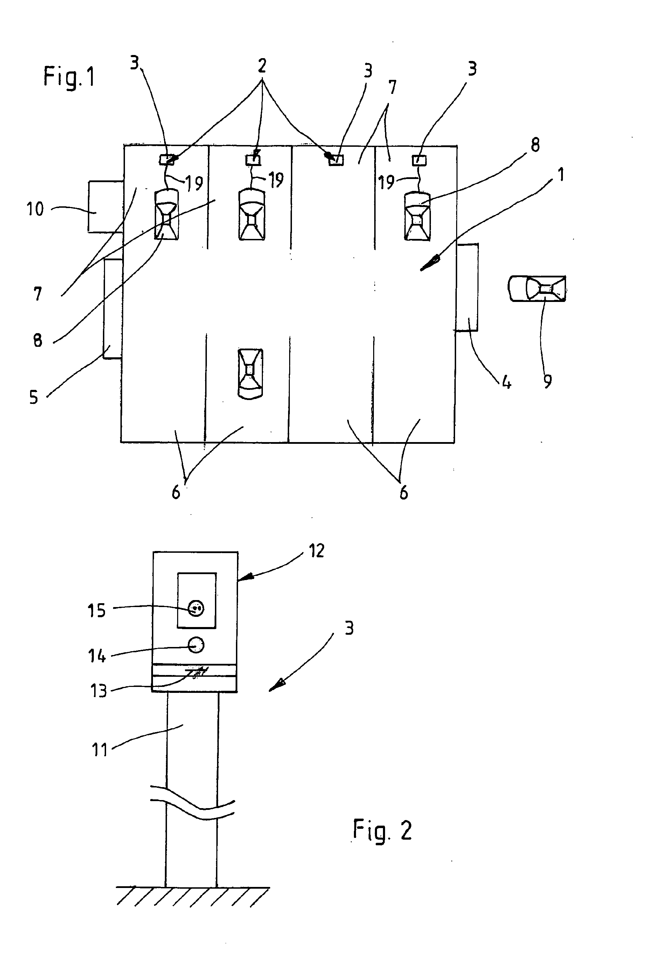

Figur 1 zeigt in schematischer Darstellung eine Parkeinrichtung 1 in Form eines Parkplatzes. Dieser verfügt in an sich bekannter Weise über eine Einfahrt 4 und eine Ausfahrt 5, die vorzugsweise beschrankt ausgebildet sind.

Die Parkeinrichtung 1 verfügt über eine Stromtankstelle 2, die eine Mehrzahl von Stromabgabeeinrichtungen 3 bereitstellt. Eine Stromabgabeeinrichtung 3 kann beispielsweise in Form einer Säule als sogenannte Stromsäule ausgebildet sein, wie sie schematisch in Figur 2 dargestellt ist.

Die Parkeinrichtung 1 nach Figur 1 stellt eine Mehrzahl von Parkbuchten 6 und 7 für insbesondere Autos 8 und 9 bereit. Gemäß dem gezeigten Ausführungsbeispiel nach Figur 1 ist eine jede Parkbucht 7 mit einer Stromabgabeeinrichtung 3 ausgerüstet. Die Parkbuchten 6 verfügen jeweils nicht über eine Stromabgabeeinrichtung 3.

Die nach Figur 1 in den Parkbuchten 7 befindlichen Autos 8 sind jeweils über ein Ladekabel 19 mit der jeweiligen Stromabgabeeinrichtung 3 der Parkbucht 7 stromtechnisch verbunden. Über die Stromabgabeeinrichtung 3 kann so ein Aufladen des vom jeweiligen Auto 8 mitgeführten Akkumulators durchgeführt werden.

Es erfolgt bevorzugter Weise eine automatische Erkennung eines in die Parkeinrichtung 1 einfahrenden Autos 9 danach, ob es sich um ein Elektroauto oder um ein herkömmliches Auto handelt. Sobald systemseitig ein Elektroauto erkannt wird, oder der Nutzer dies anfordert, erfolgt ein systemseitiger Hinweis bzw. Unterrichtung über noch freie Parkbuchten mit einer Stromabgabeeinrichtung 3. Im gezeigten Ausführungsbeispiel ist noch eine solche freie Parkbucht 7 mit einer Stromabgabeeinrichtung 3 vorhanden. Der Nutzer wird bevorzugter Weise von einem Leitsystem der Parkeinrichtung 1 zu dieser noch freien Parkbucht 7 geleitet.

Bei der Einfahrt in die Parkeinrichtung 1 wird an den Nutzer ein Identifikationsmittel ausgegeben. Bei diesem Identifikationsmittel kann es sich beispielsweise um eine Parkkarte, ein ChipCoin oder dergleichen handeln. Dieses Identifikationsmittel dient in an sich bekannter Weise zur Abrechnung von Parkgebühren, zu deren Abrechnung ein aus dem Stand der Technik an sich gleichfalls bekannter Zahlautomat 10 zum Einsatz kommt.

Sobald das Auto 9 in der vorgesehenen Parkbucht 7 geparkt ist, erfolgt ein Anschluss des Autos 9 an die zugehörige Stromabgabeeinrichtung 3 durch ein Ladekabel 19. Es wird so die stromtechnische Verbindung zwischen Auto 9 einerseits und Stromabgabeeinrichtung 3 andererseits geschaffen. Um nun den eigentlichen Ladevorgang beginnen zu können, ist die Stromabgabeeinrichtung freizuschalten. Dies geschieht nutzerseitig mittels des bei Einfahrt in die Parkeinrichtung 1 ausgegebenen Identifikationsmittels. Sobald die Freischaltung der Stromabgabeeinrichtung durchgeführt ist, beginnt der Ladevorgang. Bevorzugter Weise können nutzerseitig Ladeparameter vorgegeben werden, zu welchem Zweck die Stromabgabeeinrichtung 3 über eine entsprechende Eingabeeinrichtung verfügt.

Mit Beginn des Ladevorgangs wird der in die Steckdose 15 der Stromabgabeeinrichtung 3 eingesteckte Ladestecker des Ladekabels 19 bevorzugter Weise mechanisch gegen Herausziehen gesichert. Zumindest ein störungsfreies Herausziehen des Ladesteckers ist dann nicht möglich. Ein Herausziehen des Ladesteckers wird vielmehr systemseitig erst dann wieder gestattet, wenn der Nutzer die angefallenen Park- und Stromgebühren am Zahlautomat 10 entrichtet hat und sein mit entsprechenden Bezahldaten versehenes Identifikationsmittel von einer Leseeinrichtung der Stromabgabeeinrichtung 3 ausgelesen wird.

Die Stromabgabe durch die Stromabgabeeinrichtung endet bevorzugter Weise mit der Bezahlung der Park- und Stromgebühren am Zahlautomat 10. Bei einem "Offline"-Betrieb der Stromabgabeeinrichtung 3 ist bevorzugter Weise vorgesehen, dass die Stromabgabe endet, sobald die auf dem Identifikationsmittel gespeicherten Bezahldaten von der Stromabgabeeinrichtung ausgelesen werden und stromabgabeeinrichtungsseitig die ordnungsgemäße Bezahlung festgestellt wird. Bei Dauerparkern kann eine turnusmäßige Abrechnung, beispielsweise monatlich erfolgen.

Figur 2 zeigt in schematischer Darstellung eine Stromabgabeeinrichtung 3 in Form einer Stromsäule. Diese verfügt über einen Säulenkörper 11, der ein Bedienteil 12 trägt. Das Bedienteil 12 stellt eine Steckdose 15 zur Aufnahme des Steckers eines Ladekabels 19 bereit. Es ist ferner ein Schlitz 13 zur Aufnahme eines Identifikationsmittels in Form einer Magnetkarte sowie eine Sende- und Empfängereinheit 14 zur Verwendung mit Identifikationsmitteln in Form von ChipCoins vorgesehen. Die Bedieneinheit 12 kann darüber hinaus über ein in der Figur nicht dargestelltes Display zur weiteren Informationseingabe durch den Nutzer verfügen. Beispielsweise können Nutzungs- und/oder Zeitprofile vorgegeben werden, so dass beispielsweise nur zu bestimmten Zeiten oder nur über eine bestimme Zeitdauer unabhängig von der Parkdauer geladen wird.

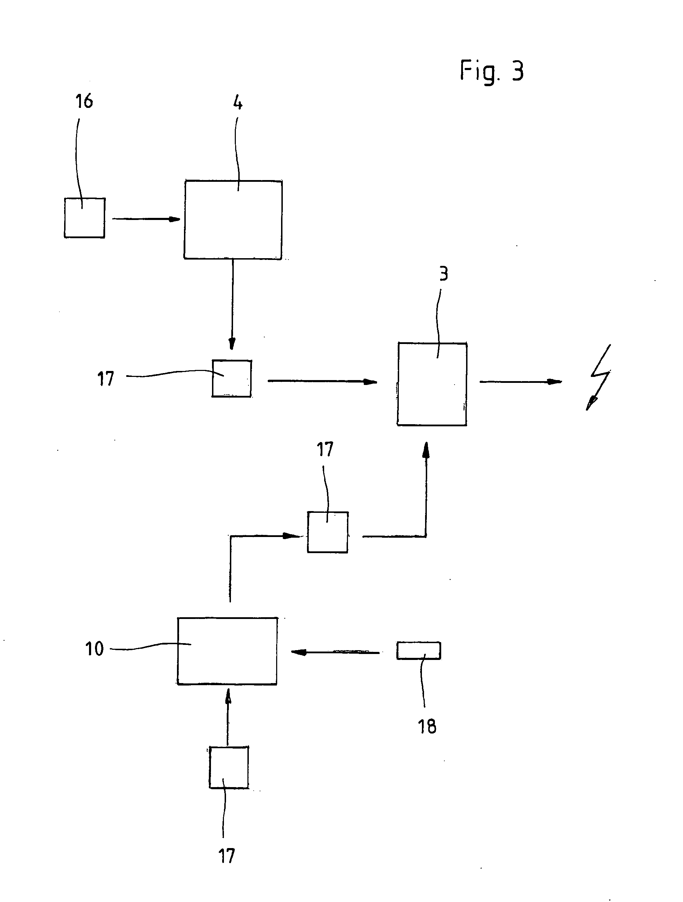

Figur 3 zeigt in schematischer Darstellung einen möglichen Verfahrensablauf. Ein Nutzer 16 fährt in eine Parkeinrichtung 1 ein und erhält bei der Einfahrt 4 zur Parkeinrichtung 1 ein Identifikationsmittel 17 in Form beispielsweise einer herkömmlichen Parkkarte. Sobald der Nutzer 16 sein Fahrzeug geparkt und stromtechnisch an eine Stromabgabeeinrichtung 3 angeschlossen hat, erfolgt mittels des Identifikationsmittels 17 eine Freischaltung der Stromabgabeeinrichtung 3, woraufhin der Ladevorgang beginnt.

Nach Rückkehr in die Parkeinrichtung 1 führt der Nutzer 16 das Identifikationsmittel 17 in den Zahlautomat 10 ein. Der Zahlautomat 10 errechnet die Park- und Stromgebühren, wobei für die Berechnung der Stromgebühr die abgenommene Strommenge ermittelt wird. Im einfachsten Fall dient zur Ermittlung der Strommenge ein Strommesszähler.

Der Nutzer 16 gleicht die vom Kassenautomat 10 ausgewiesene Gebühr mittels eines Bezahlmittels 18, beispielsweise einer Kreditkarte, aus. Das Informationsmittel 17 wird vom Zahlautomat 10 mit Bezahldaten beschrieben und an den Nutzer 16 wieder ausgegeben. Das mit den Bezahldaten versehene Identifikationsmittel 17 kann vom Benutzer 16 alsdann in die Stromabgabeeinrichtung 3 zwecks Auslesung eingeführt werden. Sobald die Stromabgabeeinrichtung die Bezahldaten auf dem Identifikationsmittel 17 ausgewertet und die ordnungsgemäße Entrichtung der angefallenen Park- und Stromgebühren erkannt hat, erfolgt eine Freischaltung des mechanisch gesperrten Ladesteckers 19, so dass der Nutzer 16 nunmehr sein Fahrzeug von der Stromabgabeeinrichtung 3 trennen und die Parkeinrichtung 1 verlassen kann.

### Bezugszeichenlisten

- 1: Parkeinrichtung
- 2: Stromtankstelle
- 3: Stromabgabeeinrichtung
- 4: Einfahrt
- 5: Ausfahrt
- 6: Parkbucht
- 7: Parkbucht
- 8: Auto
- 9: Auto
- 10: Zahlautomat
- 11: Säulenkörper
- 12: Bedienteil
- 13: Schlitz
- 14: Sender/Empfänger
- 15: Steckdose
- 16: Nutzer
- 17: Identifikationsmittel
- 18: Bezahlmittel
- 19: Ladekabel

## Patentansprüche

1. Verfahren zum Betrieb einer Stromtankstelle (2) in einer Parkeinrichtung (1), bei dem bei Einfahrt in die Parkeinrichtung (1) ein Identifikationsmittel (17) durch einen Nutzer (16) verwendet wird, wobei das Identifikationsmittel (17) eine eineindeutige Kennung bereitstellt, bei dem eine Stromabgabeeinrichtung (3) der Stromtankstelle (2) vom Nutzer (16) mittels des Identifikationsmittels (17) freigeschaltet wird und alsdann für einen Ladevorgang bereitsteht.

2. Verfahren nach Anspruch 1, **dadurch gekennzeichnet, dass** der Ladevorgang durch eine Bezahlung der angefallenen Gebühren beendet wird.

3. Verfahren nach Anspruch 1, **dadurch gekennzeichnet, dass** der Ladevorgang zeitlich nach einer Bezahlung beendet wird, wobei eine mit dem Identifikationsmittel verknüpfte Bezahlung der angefallenen Gebühren in der Stromabgabeeinrichtung (3) ausgewertet wird.

4. Verfahren nach Anspruch 1, **dadurch gekennzeichnet, dass** der Ladevorgang beendet wird, bevor eine Bezahlung der mit dem Identifikationsmittel verknüpften Gebühren erfolgt.

5. Verfahren nach Anspruch 1, **dadurch gekennzeichnet, dass** der Ladevorgang vom Nutzer durch das Identifikationsmittel beendet wird.

6. Verfahren nach einem der vorhergehenden Ansprüche, **dadurch gekennzeichnet, dass** die die Abrechnung von angefallenen Park- und Stromgebühren gemeinschaftlich erfolgt.

7. Verfahren nach einem der vorhergehenden Ansprüche, **dadurch gekennzeichnet, dass** ein Ladestecker mit Beginn des Ladevorgangs und/oder nach Auslesung der von dem Identifikationsmittel bereitgestellten eineindeutigen Kennung seitens der Stromabgabeeinrichtung verriegelt wird und die Verriegelung bei erneutem Einlesen des Identifikationsmittels freigegeben wird.

8. Verfahren nach einem der vorhergehenden Ansprüche, **dadurch gekennzeichnet, dass** dem Nutzer (16) bei Einfahrt in die Parkeinrichtung (1) freie Parkbuchten (6, 7) mit Stromabgabeeinrichtung (3) angezeigt werden.

9. Verfahren nach einem der vorhergehenden Ansprüche, **dadurch gekennzeichnet, dass** Elektroautos bei Einfahrt in die Parkeinrichtung (1) automatisch erkannt werden.

10. Verfahren nach einem der vorhergehenden Ansprüche, **dadurch gekennzeichnet, dass** die von den Stromabgabeeinrichtungen (3) der Stromtankstelle (2) insgesamt bereitgestellte Leistung zentral erfasst wird.

11. Verfahren nach einem der vorhergehenden Ansprüche, **dadurch gekennzeichnet, dass** die zur Verfügung stehende Energiemenge aufgrund von Nutzungs- und/oder Zeitprofilen auf die Stromabgabeeinrichtungen (3) der Stromtankstelle (2) verteilt wird.

12. Verfahren nach einem der vorhergehenden Ansprüche, **dadurch gekennzeichnet, dass** ein Lade- und/oder Lastmanagement verwendet wird.

## Geänderte Patentansprüche

### Geänderte Patentansprüche gemäss Regel 137(2) EPÜ.

**1.** Verfahren zum Betrieb einer Stromtankstelle (2) in einer Parkeinrichtung (1), bei dem bei Einfahrt in die Parkeinrichtung (1) ein Identifikationsmittel (17) durch einen Nutzer (16) verwendet wird, wobei das Identifikationsmittel (17) eine eineindeutige Kennung bereitstellt, bei dem eine Stromabgabeeinrichtung (3) der Stromtankstelle (2) vom Nutzer (16) mittels des Identifikationsmittels (17) freigeschaltet wird und alsdann für einen Ladevorgang bereitsteht,
**dadurch gekennzeichnet,**
**dass** über die eineindeutige Kennung der Ladevorgang durch den Nutzer mittels des Identifikationsmittels (17) beendet wird.

**2.** Verfahren nach Anspruch 1, **dadurch gekennzeichnet, dass** der Ladevorgang durch eine Bezahlung der angefallenen Gebühren beendet wird.

**3.** Verfahren nach Anspruch 1, **dadurch gekennzeichnet, dass** der Ladevorgang zeitlich nach einer Bezahlung beendet wird, wobei eine mit dem Identifikationsmittel verknüpfte Bezahlung der angefallenen Gebühren in der Stromabgabeeinrichtung (3) ausgewertet wird.

**4.** Verfahren nach Anspruch 1, **dadurch gekennzeichnet, dass** der Ladevorgang beendet wird, bevor eine Bezahlung der mit dem Identifikationsmittel verknüpften Gebühren erfolgt.

**5.** Verfahren nach Anspruch 1, **dadurch gekennzeichnet, dass** der Ladevorgang vom Nutzer durch das Identifikationsmittel beendet wird.

**6.** Verfahren nach einem der vorhergehenden Ansprüche, **dadurch gekennzeichnet, dass** die die Abrechnung von angefallenen Park- und Stromgebühren gemeinschaftlich erfolgt.

**7.** Verfahren nach einem der vorhergehenden Ansprüche, **dadurch gekennzeichnet, dass** ein Ladestecker mit Beginn des Ladevorgangs und/oder nach Auslesung der von dem Identifikationsmittel bereitgestellten eineindeutigen Kennung seitens der Stromabgabeeinrichtung verriegelt wird und die Verriegelung bei erneutem Einlesen des Identifikationsmittels freigegeben wird.

**8.** Verfahren nach einem der vorhergehenden Ansprüche, **dadurch gekennzeichnet, dass** dem Nutzer (16) bei Einfahrt in die Parkeinrichtung (1) freie Parkbuchten (6, 7) mit Stromabgabeeinrichtung (3) angezeigt werden.

**9.** Verfahren nach einem der vorhergehenden Ansprüche, **dadurch gekennzeichnet, dass** Elektroautos bei Einfahrt in die Parkeinrichtung (1) automatisch erkannt werden.

**10.** Verfahren nach einem der vorhergehenden Ansprüche, **dadurch gekennzeichnet, dass** die von den Stromabgabeeinrichtungen (3) der Stromtankstelle (2) insgesamt bereitgestellte Leistung zentral erfasst wird.

**11.** Verfahren nach einem der vorhergehenden Ansprüche, **dadurch gekennzeichnet, dass** die zur Verfügung stehende Energiemenge aufgrund von Nutzungs- und/oder Zeitprofilen auf die Stromabgabeeinrichtungen (3) der Stromtankstelle (2) verteilt wird.

**12.** Verfahren nach einem der vorhergehenden Ansprüche, **dadurch gekennzeichnet,dass** ein Lade- und/oder Lastmanagement verwendet wird.
